# EUROPEAN PATENT APPLICATION

(11) **EP 1 332 669 A1**
(43) Date of publication of application: **06.08.2003**
(21) Application number: 02425049.0
(22) Date of filing: 01.02.2002
(51) Int. Cl.: A01K 1/02

(54) **A device for carrying a four-legged animal**

(71) Applicant: Ciuffo Gatto S.r.L., 10138 Torino (IT)
(72) Inventor: Leo, Franca, 10138 Torino (IT)
(74) Representative: Gerbino, Angelo

(57) **Abstract**

A device for carrying a four-legged animal (10) comprises a sheet (12) of a flexible material which can be folded over so as to form a curved bottom portion (14) and an upper portion constituted by two edges (16) of the sheet (12) which have been brought together. Four apertures (18) are formed through the bottom portion (14) substantially at the four corners of a rectangle to enable the four legs of the animal (10) to pass through them. The upper portion has means enabling a user to hold the device in a suspended configuration.

## Description

The present invention relates to a device for carrying a four-legged animal, in particular a small or small-to-medium size dog.

The object of the present invention is to provide a device of the type described above which can ensure that the animal is comfortable while being carried, while at the same time being as easy as possible for a user to carry.

This object is achieved according to the invention by providing a device having the characteristics specifically claimed in the main Claim which follows. Preferential characteristics of the device of the invention are described in the dependent Claims.

Advantages and characteristics of the present invention will become apparent from the following detailed description which is provided purely by way of non-limitative example, with reference to the appended drawings, in which:
Figure 1 is a plan view of a device of the invention, in its unfolded, non-operational configuration;
Figure 2 is a perspective view of a device of Figure 1 in its operational configuration;
Figure 3 is a perspective view of the device shown in the preceding drawings with an accessory inserted therein;
Figure 4 is a plan view of a further embodiment of the device of the invention in its unfolded, non-operational configuration.
Figure 5 is a plan view of the device of Figure 4 with an accessory inserted therein, and
Figure 6 is a perspective view of the device of Figures 4 and 5 in its operational configuration.

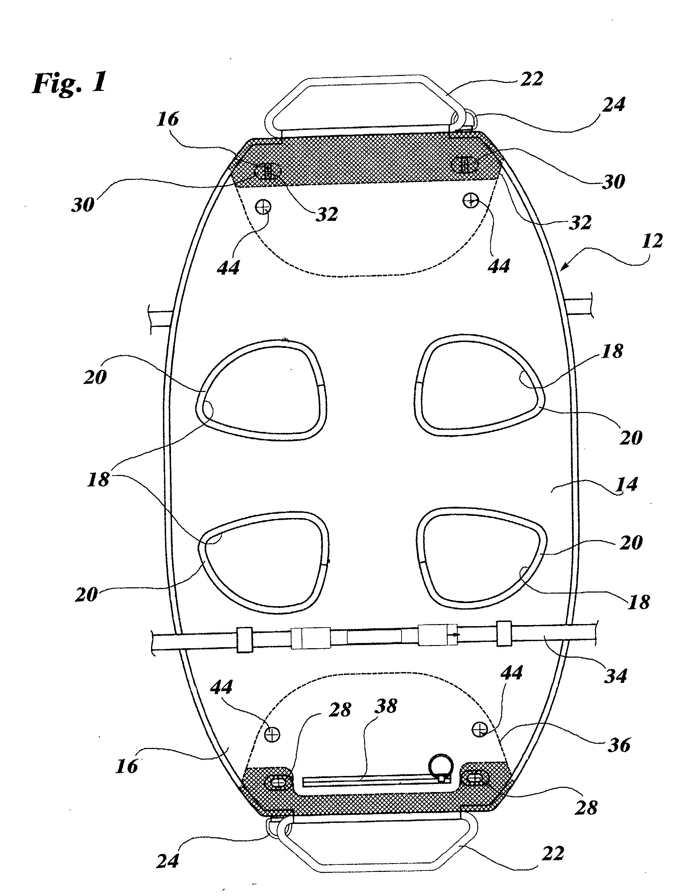

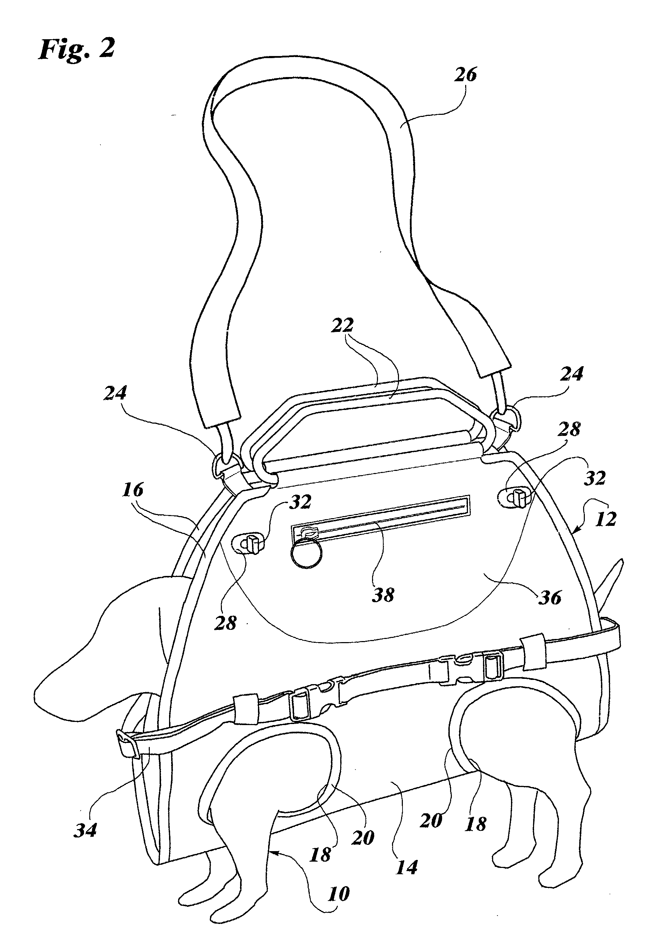

A device for carrying a four-legged animal, in particular a dog 10, comprises (see figures 1 and 2) a sheet 12 of flexible material which can be folded over so as to form a curved bottom portion 14 and an upper portion constituted by the two ends 16 of the sheet 12 which have been brought together.

Four openings 18 are formed in the bottom portion 14, positioned substantially at the four corners of a rectangle, for the legs of the dog 10 to pass through. The edges of the openings 18 have a trimming 20 of a soft material so as to avoid irritating the dog's skin.

Respective handles 22 are fitted to the top ends 16 of the sheet 12 for a user to grip with his hands. In addition, rings 24 are provided on the ends 16 of the sheet so a shoulder strap 26 can also be attached.

The device also has means for holding the two ends 16 together, in the form of slots 28 formed in one end 16 and locking devices 30 applied to a surface of the other end 16 which is opposite (in the folded configuration of the sheet 12) a respective slot 28 for selectively inserting therein. These locking devices 30 are of a conventional type, made up of a fixed base with a rotatable projection 32 operable to pass through the associated slot 28 solely when rotated at a predetermined angle relative to the fixed base.

A strap 34 is also fitted to a median portion of the outer surface of the sheet 12, while a pocket 36 with a selectively closable fastening, such as a zip 38, is applied to a top end thereof.

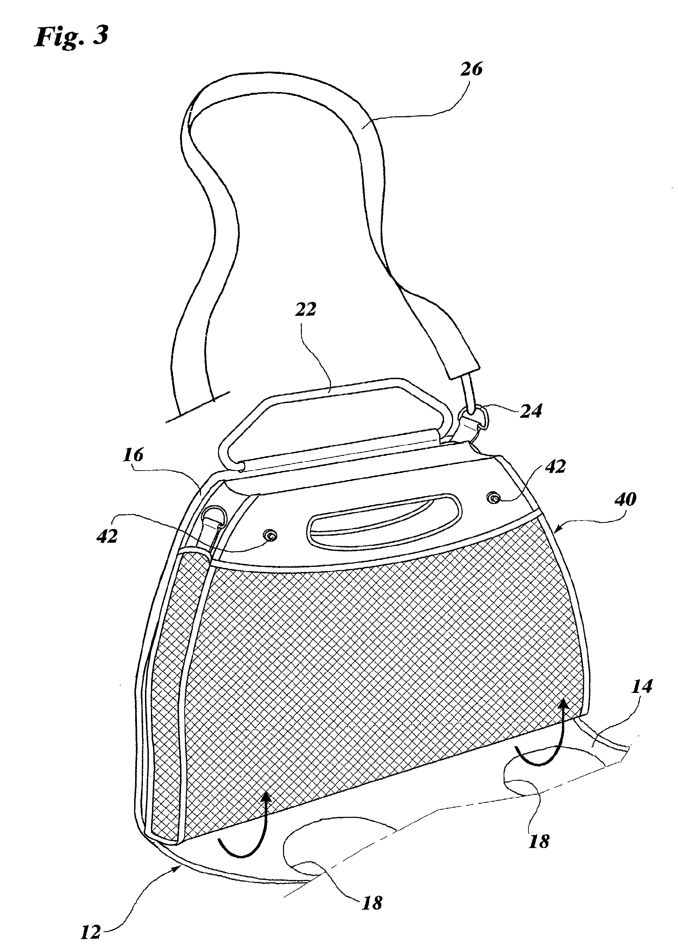

A bag 40 can also be enclosed (see Figure 3) inside the folded sheet 12 when this is not being used to carry a dog 10. The bag 40 is removably attached to the sheet 12 by means of press studs 42 for engaging in complementary seats 44 formed in the inner surface of the sheet 12.

In order to use the device described above, it is first necessary to take out the bag 40 and to disengage the rotatable projections 32 from the slots 28 so as to be able to open out the sheet 12 (see Figure 1) and position it under the dog 10 to be carried in such a way that its legs can be fitted through the apertures 18. The sheet 12 is then folded again and the rotatable projections 32 are engaged once again in the slots 28 so that the dog 10 is held inside with its legs protruding through the apertures 18 and its abdomen supported by the bottom 14 (see Figure 2). For greater safety, the strap 34 can then be secured in order to hold the dog 10 more tightly.

Depending on personal preference and specific requirements, the user can then choose whether to carry the device by gripping the handles 22 or by placing the shoulder strap 26 over one shoulder. In either case the device enables the dog 10 to be carried in a sling, with its abdomen evenly supported so as to avoid any strain on back muscles.

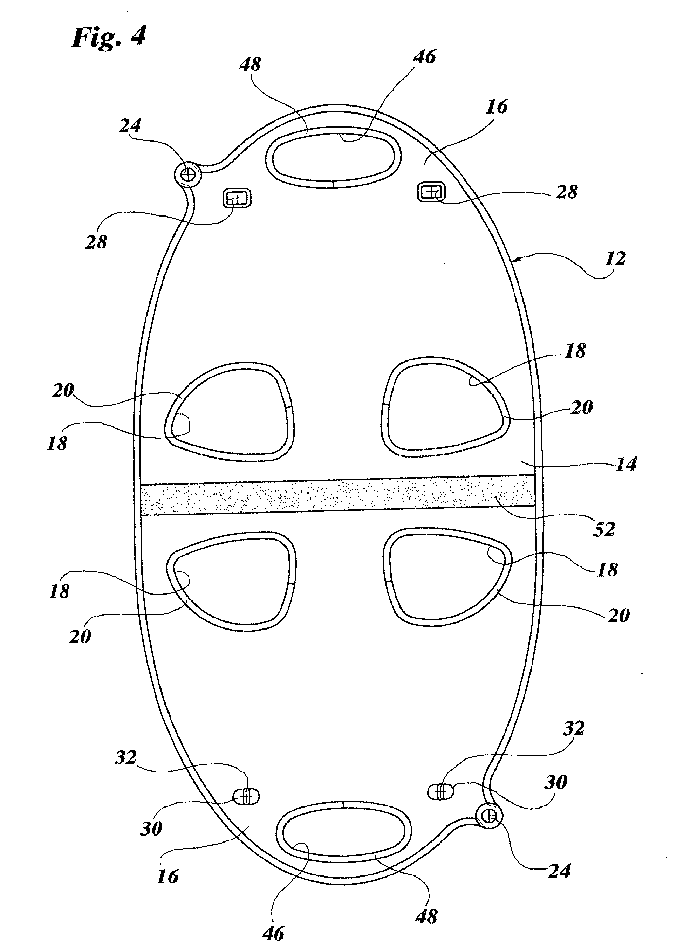

Figures 4 to 6 show a second embodiment of the invention, in which reference numbers which are the same as the ones used with reference to the preceding Figures 1 to 3 refer to similar or equivalent parts.

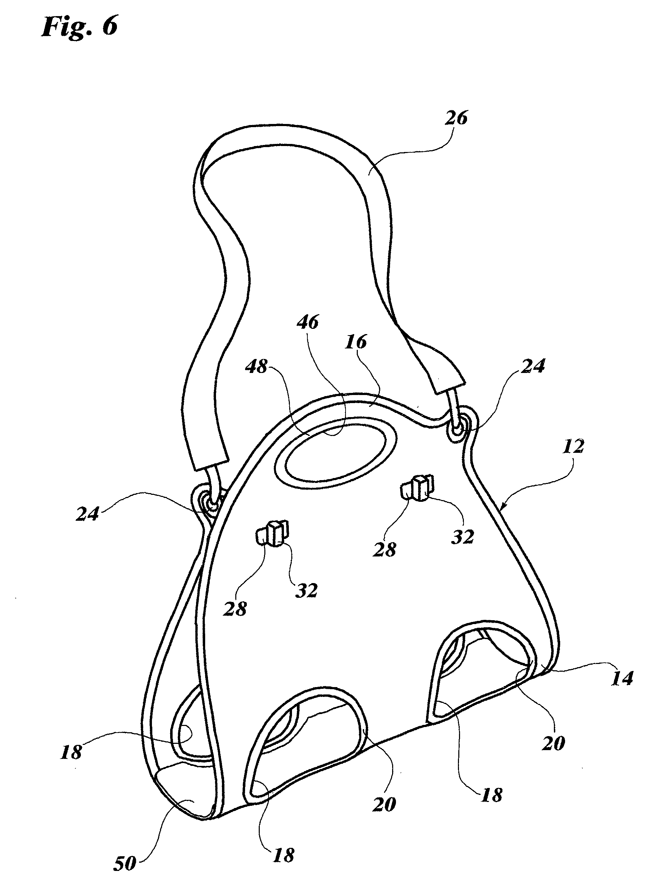

The general structure and function of the device are substantially unchanged from those described with reference to the first embodiment. In this case, however, instead of applied handles, the carrying means consist of apertures 46 formed in the two top ends of the sheet 12 so that they face each other when the sheet 12 is folded over (see Figure 6) and a user can pass his hand through them. The edges of the apertures 46 also have a trimming 48 of soft material.

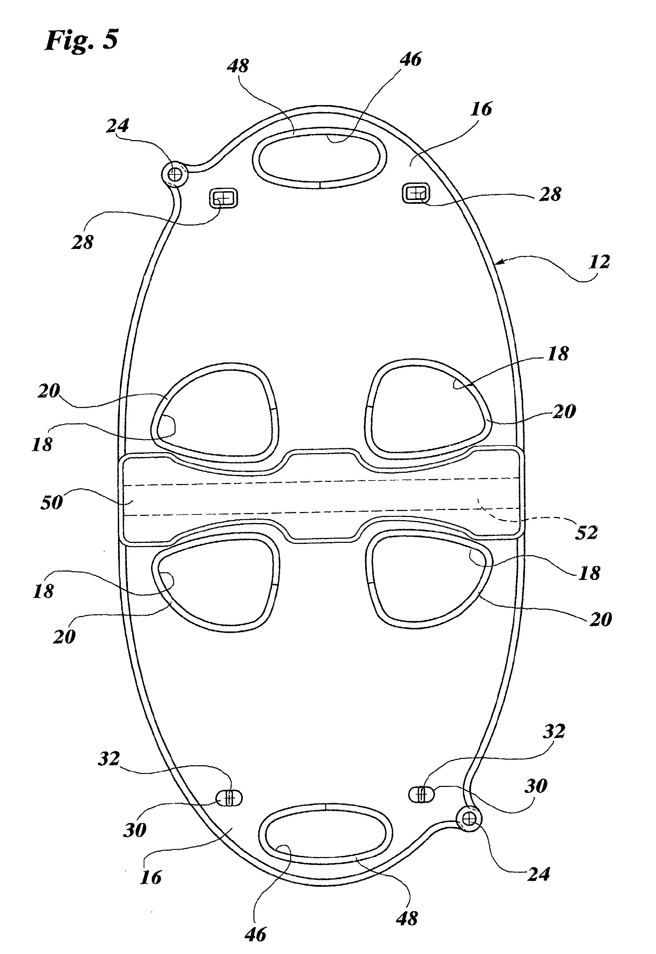

In addition, a removable insert 50 (see Figure 5) is fitted to the inside surface of the bottom portion 14 by means of hooks or velcro 52 (Figure 4). The insert 50 can be padded in order to make the dog 10 more comfortable and can be easily removed for washing or replacement should it become soiled.

Naturally, the principle of the invention remaining unchanged, manufacturing details and embodiments can be varied widely from those described and illustrated here purely by way of non-limitative example, without departing thereby from the scope of the invention. In particular, substantially any material can be used for the sheet 12, any plastics or textile material for example, providing it is suitably flexible and would not irritate the skin of the animal being carried.

## Claims

1. A device for carrying a four-legged animal (10) which comprises a sheet (12) of flexible material which can be folded over'so as to form a curved bottom portion (14) and an upper portion constituted by two ends (16) of the sheet (12) which are brought together, at least four apertures (18) being formed through the said bottom portion (14) so that they are arranged substantially at the four corners of a rectangle in such a way that the animal's (10) four legs can pass through them, and the said upper portion having means whereby a user can carry the said device in a suspended configuration.

2. A device according to Claim 1, which includes means for holding the said ends (16) together.

3. A device according to Claim 2, in which the said means for holding the ends (16) together include at least one slot (28) formed in one of the said ends (16) and a locking device (30) fixed to the other end (16) so that it faces the said slot (28) and can be selectively engaged therein.

4. A device according to any preceding Claim, in which the said suspension means include respective rings (24) fixed to the ends (16) of the said sheet (12) for securing the ends of a shoulder strap (26) thereto.

5. A device according to any preceding Claim, which includes a strap (34) secured to a median portion of the outer surface of the sheet (12).

6. A device according to any preceding Claim, in which a pocket (36) is applied to the said sheet (12) so as to be accessible from the outside.

7. A device according to any preceding Claim, having a bag (40) removably secured within the said folded sheet (12).

8. A device according to any preceding Claim, in which the suspension means include respective handles (22) fixed to the ends (16) of the said sheet (12) so that they can be gripped by a user's hand.

9. A device according to any Claim from 1 to 7, in which the said suspension means includes respective apertures (46) through the ends (16) of the sheet (12) so as to allow a user to pass a hand therethrough.

10. A device according to any preceding Claim, in which a removable insert (46) is applied to the inside surface of the said bottom portion (14).

11. A device according to Claim 10, in which the said removable insert (50) is applied to the inside surface of the bottom portion (14) by means of fixing devices such as hooks (52).

12. A device according to any preceding Claim, in which the edges of the apertures (18) have a trimming (20) of a soft material.
